# EUROPÄISCHE PATENTSCHRIFT

(11) **EP 1 561 873 B1**
(45) Veröffentlichungstag und Bekanntmachung des Hinweises auf die Patenterteilung: **05.11.2008**
(21) Anmeldenummer: 05100527.0
(22) Anmeldetag: 27.01.2005
(51) Int. Cl.: E04B 1/58, E04B 1/19

(54) **Knotenverbinder**
Joint connector
Noeud d'assemblage

(30) Priorität: 09.02.2004 DE 102004006210
(43) Veröffentlichungstag der Anmeldung: 10.08.2005
(73) Patentinhaber: HILTI Aktiengesellschaft, 9494 Schaan (LI)
(72) Erfinder: Herb, Armin, 86974, Apfeldorf (DE); Hoffmann, Armin, 86899, Landsberg (DE)
(74) Vertreter: Wildi, Roland

(56) Entgegenhaltungen:
- DE-U- 7 440 624
- FR-A- 1 415 780
- US-A- 4 289 417
- US-A- 4 470 238

## Beschreibung

Die Erfindung betrifft einen Knotenverbinder, insbesondere für Abhängekonstruktionen, der im Oberbegriff von Patentanspruch 1 genannten Art.

Derartige Knotenverbinder werden z. B. bei Abhängekonstruktionen in Industriehallen aus Stahl- und Stahlbetonhallen verwendet. Die Abhängekonstruktionen dienen dabei der Installation der Haustechnik und der Prozessmedien. Für flächendeckende Befestigungsmöglichkeiten werden bei den Abhängekonstruktionen Montageschienen rasterartig an die Träger der Halle gehängt. Wegen der grossen Trägerabstände der Tragkonstruktion muss die Abhängekonstruktion senkrecht und schräg vom Träger zum Schienenraster geführt werden. Die Schrägabhängung wird dabei Knotenpunkten zusammengeführt und über Knotenverbinder verbunden.

Aus der DE 200 16 876 U1 ist ein Tragwerk mit stabförmigen Bauteilen und mit Knotenverbindern bekannt. Die Knotenverbinder weisen zwei Halbschalen auf, die an ihrer Stirnfläche jeweils eine Vertiefung besitzen, um ein stabförmiges Bauteil aufzunehmen und die jeweils seitliche Ausnehmungen aufweisen, die sich in den Anliegeflächen der Halbschalen radial nach aussen zur seitlichen Umfangsfläche erstrecken und spiegelbildlich zueinander angeordnet sind zur Aufnahme von stabförmigen Bauteilen. Beide Halbschalen werden nach dem Einlegen der stabförmigen Bauteile in die Ausnehmungen der ersten Halbschale und nach auflegen der zweiten Halbschale über Schrauben miteinander zu einem Knotenverbinder verspannt.

Von Nachteil hierbei sind der hohe Aufwand bei der Montage des Knotenverbinders mit den stabförmigen Bauteilen sowie die Tatsache, dass die Längen der stabförmigen Bauteile genau an die räumliche Lage des Knotenverbinders in der Tragkonstruktion angepasst sein müssen.

Aus der DE 32 24 986 A1 ist ferner eine Vorrichtung zur Befestigung von Montageteilen an einer Betonwand bekannt. Diese Vorrichtung beinhaltet einen Verbinder mit zwei Abschnitten, einen ersten mit einem Durchgang für ein erstes stabförmiges Bauteil, und einen zweiten Abschnitt, der schwenkbar mit dem ersten Abschnitt verbunden ist und der einen Durchgang für ein zweites stabförmiges Bauteil aufweist.

Nachteilig an dieser Lösung ist, dass nur zwei stabförmige Bauteile miteinander verbunden werden können und dass bei Verspannen der beiden stabförmigen Bauteile ein Grossteil der Belastung auf dem Schwenklager zwischen den beiden Abschnitten liegt.

Aus der US 4 470 238 ist eine zusammengesetzte Struktur bekannt, die eine aus festen, vorfabrizierten Matrixelementen gebildete Matrix enthält. Die Matrixelemente weisen dabei voneinander beabstandete und parallel oder quer zueinander orientierte Schlitze auf, in denen zylindrische Stangen aufgenommen werden können.

Aus der FR 2 526 890 A ist ein Knotenverbinder für Profile bekannt, der wenigstens zwei hohle U-förmige Elemente umfasst. Die Elemente verlaufen quer und/oder parallel zueinander und weisen an ihren seitlichen Schenkeln Löcher für Befestigungsmittel auf.

Der vorliegenden Erfindung liegt die Aufgabe zugrunde, einen Knotenverbinder bereitzustellen, der die genannten Nachteile vermeidet und hohe Lasten abzutragen vermag.

Erfindungsgemäss wird die Aufgabe dadurch gelöst, dass die schlitzförmig ausgebildeten und seitlich versetzt zueinander in parallel verlaufenden Ebenen angeordneten Durchgänge für die stabförmigen Konstruktionselemente zumindest bereichsweise zueinander geöffnet sind.

Durch diese Massnahme wird ein leicht zu montierender, materialsparender Knotenverbinder bereitgestellt, bei dem die die stabförmigen Konstruktionselemente im Knotenverbinder aneinander vorbeigeführt werden, so dass die Länge der Konstruktionselemente für die Höhenlage des Knotenverbinders in der Abhängekonstruktion keine Rolle mehr spielt. Ferner wird die Zugbelastung von dem gesamten Knotenverbinder abgebaut, was zu einer Langlebigkeit der gefertigten Konstruktionen führt.

Der Knotenverbinder kann dabei einen scheibenförmig-zylindrischen Habitus aufweisen, also z. B. als flach-zylindrischer, scheibenförmiger Körper ausgebildet sein, an dessen Zylindermantelfläche die Durchgänge austreten. Hierdurch wird ein kompakter Knotenverbinder bereitgestellt, der die Zentrierung und Justierung der stabförmigen Konstruktionselemente unterstützt.

Von Vorteil kann es ferner sein, wenn wenigstens ein Schlitzboden eines Durchgangs einen konischen, den Durchgang nach innen hin verengenden Verlauf aufweist. Durch diese Massnahme sind am Schlitzboden schräge Führungsflächen vorhanden, die ein leichtes Einfädeln der stabförmigen Konstruktionselemente in die schlitzförmigen Durchgänge erlauben und die eine grosse Variationsbreite bei den möglichen Kreuzungswinkeln der stabförmigen Konstruktionselemente zueinander ermöglichen.

Vorteilhaft weist der oder jeder Durchgang zwei Schlitzböden auf, die jeweils einen konischen, den Durchgang nach innen verengenden Verlauf aufweisen und die an der engsten Stelle einen Abstand zueinander aufweisen, der mindestens der lichten Weite der Durchgänge entspricht. Hierdurch wird eine optimale Führung der stabförmigen Konstruktionselemente ermöglicht.

Eine vorteilhafte Symmetrie mit optimaler Lastverteilung ergibt sich, wenn die Durchgänge zu beiden Seiten einer Mittelebene des Knotenverbinders angeordnet sind.

Vorteilhaft sind an den Austrittsöffnungen der Durchgänge an der Aussenfläche des Knotenverbinders Abstützstellen für Verankerungselemente der stabförmigen Konstruktionselemente angeordnet, so dass auf technisch einfache Weise eine Angriffsmöglichkeit für diese geschaffen wird.

Die Symmetrie des Knotenverbinders und der Durchgänge ist optimal, wenn der oder die Schlitzböden des einen Durchgangs bezogen auf eine durch die Verbindungsaufnahme definierte Rotationsachse des Knotenverbinders rotationssymmetrisch ausgebildet sind zu dem oder den Schlitzböden des anderen Durchgangs, wobei die Rotationssymmetrie einer 2zähligen Rotationsachse folgt.

Vorteilhaft durchsetzt ein Materialsteg beide Durchgänge in einem symmetrischen Abstand zu den Schlitzböden der beiden Durchgänge, wobei der Abstand mindestens der lichten Weite der Durchgänge entspricht. Der Materialsteg ist dabei günstigerweise als Bolzen ausgebildet, wodurch die Produktionskosten niedrig gehalten werden können. Die Mantelfläche des Bolzens fungiert dabei als reduzierter zweiter Schlitzboden. Durch anziehen des vorzugsweise als Gewindebolzen ausgeführten Bolzens können die beiden Durchgänge zusammengezogen werden. Die beiden stabförmigen Konstruktionselemente in den Durchgängen, wie z. B. zwei Gewindestangen, werden dadurch verklemmt und gegen Verdrehen gesichert.

Weitere Vorteile und Massnahmen der Erfindung ergeben sich aus den Unteransprüchen, der nachfolgenden Beschreibung und den Zeichnungen. In den Zeichnungen ist die Erfindung in zwei Ausführungsbeispielen dargestellt.

Es zeigen:
- Fig. 1: eine Seitenansicht in Richtung I aus Fig. 3 auf einen erfindungsgemässen Knotenverbinder,
- Fig. 2: einen Ansicht von oben auf den Knotenverbinder aus Fig. 1,
- Fig. 3: einen Schnitt entlang der Linie III - III aus Fig. 2 durch den Knotenverbinder mit in den Durchgängen angeordneten stabförmigen Bauteilen,
- Fig. 4: eine Ansicht von oben auf einen weiteren Knotenverbinder,
- Fig. 5: einen Schnitt entlang der Linie V - V aus Fig. 4 durch den Knotenverbinder mit in den Durchgängen angeordneten stabförmigen Bauteilen.

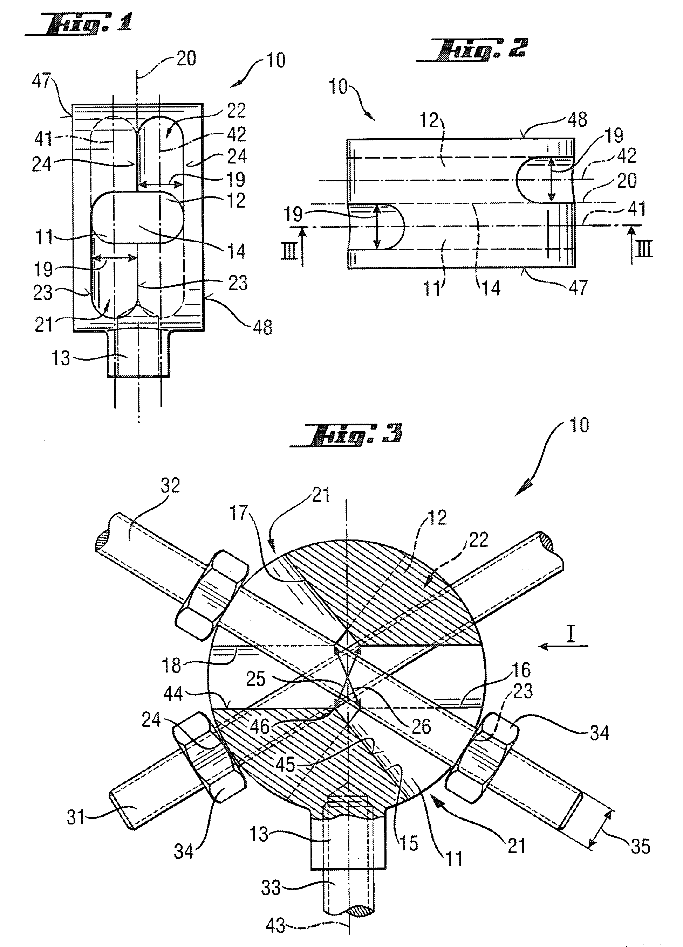

Der erfindungsgemässe Knotenverbinder 10 weist in dem Ausführungsbeispiel gemäss den Figuren 1 bis 3 eine flach-zylindrische äussere Form bzw. Habitus auf und ist einteilig ausgebildet. In den Knotenverbinder 10 sind zwei schlitzförmige Durchgänge 11, 12 zur Aufnahme von stabförmigen Konstruktionselementen 31, 32, wie z. B. Gewindestangen, eingearbeitet, die jeweils zu einer Seite einer Mittelebene 20 des Knotenverbinders 10 angeordnet sind. In einem offenen Bereich 14, der in der Mittelebene 20 liegt, sind die Durchgänge 11, 12 zueinander offen ausgebildet. Die schlitzförmigen Durchgänge 11, 12 definieren selber Ebenen 41, 42 die parallel zueinander und parallel zu der Mittelebene 20 des Knotenverbinders 10 verlaufen. Nach axial aussen werden die Durchgänge 11, 12 von kreisförmigen Aussenwänden 47, 48 des Knotenverbinders 10 begrenzt.

Die Durchgänge 11, 12 verlaufen mit ihrer Mittelachse nicht richtungsgleich im Knotenverbinder 10, sondern in Winkeln zueinander, von denen der spitze Winkel vorzugsweise zwischen 35° und 75°beträgt und der flache Winkel respektive 145° bis 105° beträgt.

Die schlitzförmigen Durchgänge 11, 12 sind entlang ihres Längsverlaufs von einer Austrittsöffnung 21, 22 zur gegenüberliegenden Austrittsöffnung 21, 22 jeweils über zwei, sich im Wesentlichen gegenüberliegende Schlitzböden 15, 17 und 16, 18 begrenzt. Diese Schlitzböden 15, 16, 17, 18 weisen jeweils einen konischen Verlauf auf, wodurch die schlitzförmigen Durchgänge 11, 12 zum Inneren des Knotenverbinders 10 hin verengt sind. Die Schlitzböden 15, 16, 17, 18 weisen dazu zwei ungefähr in Richtung des Zentrums des Knotenverbinders 10 ansteigende Flächenabschnitte 44, 45 auf, die in einem Kulminationspunkt 46 zusammentreffen. Im Bereich der Kulminationspunkte 46 ist der Abstand 25, 26 zwischen den Schlitzböden 15, 17 und 16, 17 wenigstens so gross, wie die lichte Weite 19 der schlitzförmigen Durchgänge 11, 12. Die lichte Weite 19 der schlitzförmigen Durchgänge 11, 12 ist dabei an die Dicke 35 bzw. den Durchmesser der, mit dem Knotenverbinder 10 zu verwendenden und über diesen verbindbaren stabförmigen Konstruktionselemente 31, 32 angepasst.

Die Schlitzböden 15, 17 und 16, 18 zu beiden Seiten der Mittelebene 20 des Knotenverbinders 10 sind in einer Symmetrie an dem Knotenverbinder 10 angeordnet, die einer 2zähligen Rotationsachse 43 folgt. Die Rotationsachse 43 liegt dabei in der Mittelebene 20 und koaxial mit einer Verbindungsaufnahme 13 für ein drittes Konstruktionselement 33, wie z. B. einer Gewindestange. Diese 2-zählige Rotationssymmetrie bedeutet, dass nach einer 180° Drehung um die Rotationsachse 43 der Knotenverbinder wieder mit sich selbst zur Deckung gebracht wird.

In Fig. 3 ist der Knotenverbinder 10 mit, in den Durchgängen 11, 12 angeordneten stabförmigen Konstruktionselementen 31, 32 in Form von Gewindestangen dargestellt. Diese stabförmigen Konstruktionselemente 31, 32 sind z. B. über hier nicht dargestellte Verbinder an den Trägern einer Hallenkonstruktion festgelegt. Aufgrund der seitlich versetzten Anordnung der Durchgänge 11, 12 zu der Mittelebene 20 des Knotenverbinders 10 können beide stabförmigen Konstruktionselemente 31, 32 aneinander vorbeilaufend im Knotenverbinder geführt werden. Über Verankerungselemente 34, wie z. B. Muttern, die an Abstützstellen 23, 24 an den Rändern der Austrittsöffnungen 21, 22 der Durchgänge 11, 12 angreifen, können die stabförmigen Konstruktionselemente 31, 32 am Knotenverbinder 10 verankert werden. Eine Justage des Knotenverbinders 10 in der Abhängekonstruktion bezüglich seiner Höhenlage und zum Zentrieren der stabförmigen Konstruktionselemente 31, 32 ist bei der Verwendung von Muttern oder ähnlichen Schraubmitteln ebenfalls möglich.

In der Verbindsaufnahme 13 ist ferner ein weiteres, als Gewindestange ausgebildetes, Konstruktionselement 33 festgelegt, an dem z. B. eine Montageschiene einer Deckenabhängung angeordnet ist.

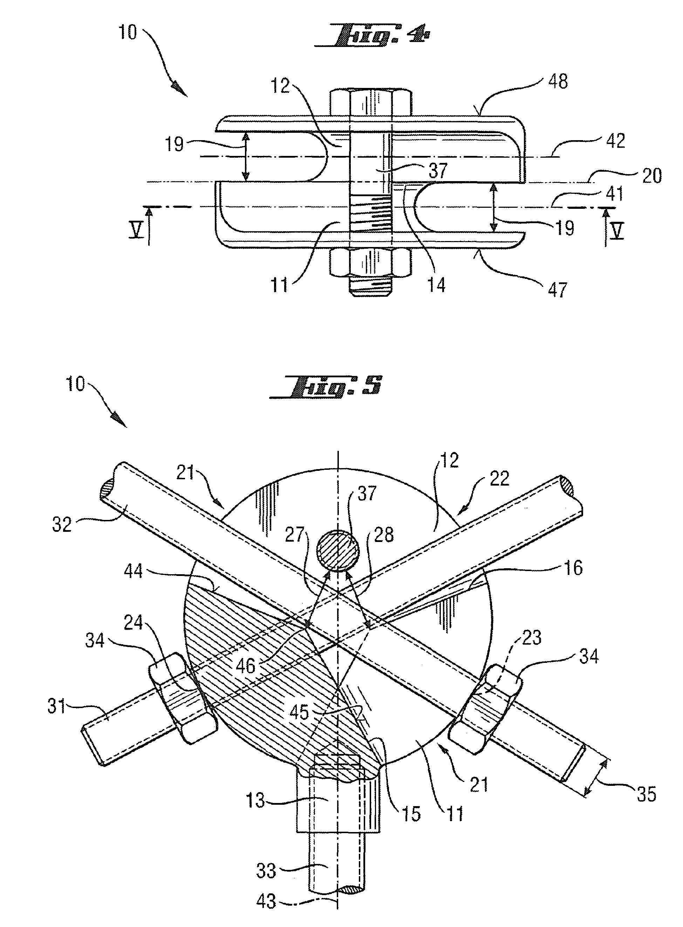

Der in den Figuren 4 und 5 dargestellte weitere Knotenverbinder 10 unterscheidet sich lediglich dadurch von dem vorhergehend in den Figuren 1 bis 3 beschriebenen, dass die Schlitzböden 17, 18 als Gegenlager der Schlitzböden 15, 16, reduziert sind auf die Mantelfläche eines Bolzens 37, der etwas oberhalb des Zentrums des Knotenverbinders 10 diesen durchsetzt. Auch in dieser Variante bleibt der kleinste Abstand 27, 28 zwischen den Schlitzböden 15, 16 und der Mantelfläche des Bolzens 37 wenigstens so gross wie die lichte Schlitzweite 19. Bezüglich weiterer, hier nicht erwähnter, Bezugszeichen wird vollumfänglich Bezug genommen auf die vorhergehende Beschreibung zu den Figuren 1 bis 3.

## Patentansprüche

1. Knotenverbinder, insbesondere für Abhängekonstruktionen, der wenigstens zwei Durchgänge (11, 12) für jeweils wenigstens ein stabförmiges Konstruktionselement (31, 32) aufweist, und der wenigstens eine Verbindungsaufnahme (13) für ein drittes Konstruktionselement (33) aufweist, wobei
die Durchgänge (11, 12) schlitzförmig ausgebildet und seitlich versetzt zueinander in parallel verlaufenden Ebenen (41, 42) angeordnet sind,
**dadurch gekennzeichnet, dass** die Durchgänge (11, 12) zumindest bereichsweise zueinander geöffnet sind.

2. Knotenverbinder nach Anspruch 1 **dadurch gekennzeichnet, dass** wenigstens ein Schlitzboden (15, 16, 17, 18) eines Durchgangs (11, 12) einen konischen, den Durchgang (11, 12) nach innen hin verengenden Verlauf aufweist.

3. Knotenverbinder nach Anspruch 1 oder 2, **dadurch gekennzeichnet, dass** der der oder jeder Durchgang (11, 12) zwei Schlitzböden (15, 16, 17, 18) aufweist, die jeweils einen konischen, den Durchgang (11, 12) nach innen verengenden Verlauf aufweisen und die an der engste Stelle einen Abstand (25, 26) zueinander aufweisen, der mindestens der lichten Weite (19) der Durchgänge (11, 12) entspricht.

4. Knotenverbinder nach einem der Ansprüche 1 bis 3, **dadurch gekennzeichnet, dass** er einen im Wesentlichen scheibenförmig-zylindrischen Habitus aufweist, d.h., dass er z.B. als flach-zylindrischer, scheibenförmigen Körper ausgebildet sein kann, an dessen Zylindermantelfläche die Durchgänge austreten.

5. Knotenverbinder nach einem der Ansprüche 1 bis 4, **dadurch gekennzeichnet, dass** die Durchgänge (11, 12) zu beiden Seiten einer Mittelebene (20) des Knotenverbinders (10) angeordnet sind.

6. Knotenverbinder nach einem der Ansprüche 1 bis 5, **dadurch gekennzeichnet, dass** an Öffnungen (21, 22) der Durchgänge (11, 12) Abstützstellen (23, 24) für Verankerungselemente (34) der stabförmigen Konstruktionselemente (31, 32) angeordnet sind.

7. Knotenverbinder nach einem der Ansprüche 1 bis 6, **dadurch gekennzeichnet, dass** der oder die Schlitzböden (15, 17) des einen Durchgangs (11) bezogen auf eine durch die Verbindungsaufnahme (13) definierte Rotationsachse (43) des Knotenverbinders (10) rotationssymmetrisch ausgebildet sind zu dem oder den Schlitzböden (16, 18) des anderen Durchgangs (12), wobei die Rotationssymmetrie einer 2-zähligen Rotationsachse folgt.

8. Knotenverbinder nach einem der Ansprüche 1 bis 7, **dadurch gekennzeichnet, dass** ein Materialsteg beide Durchgänge (11, 12) in einem symmetrischen Abstand zu den Schlitzböden (15, 16) der beiden Durchgänge (11, 12) durchsetzt, wobei der Abstand mindestens der lichten Weite (19) der Durchgänge (11, 12) entspricht.

9. Knotenverbinder nach Anspruch 8, **dadurch gekennzeichnet, dass** der Materialsteg als Bolzen (37) ausgebildet ist.

## Claims

1. Junction connector, especially for suspension constructions, which has at least two passages (11, 12), in each case for at least one rod shaped constructional element (31, 32), and which has at least one connecting reception (13) for a third constructional element (33), wherein the passages (11, 12) are formed slot shaped and are arranged laterally offset with respect to each other in planes (41, 42) that extend parallel to each other, **characterised in that** the passages (11, 12) are open to one another at least in some regions.

2. Junction connector according to claim 1, **characterised in that** at least one slot base (15, 16, 17, 18) of a passage (11, 12) narrows conically as it extends inwardly into the passage (11, 12).

3. Junction connector according to claim 1 or 2, **characterised in that** the or each passage (11, 12) has two slot bases (15, 16, 17, 18) each of which narrows conically as it extends inwardly into the passage (11, 12), and which at the narrowest point have a spacing (25, 26) from each other which corresponds to at least the clear width (19) of the passages (11, 12).

4. Junction connector according to one of claims 1 to 3, **characterised in that** it is essentially cylindrical disc shaped in physical appearance, i.e. that it can be fashioned e.g. as a flat cylindrical disc shaped body on whose cylindrical outer surface the passages emerge.

5. Junction connector according to one of claims 1 to 4, **characterised in that** the passages (11, 12) are arranged to the two sides of a central plane (20) of the junction connector (10).

6. Junction connector according to one of claims 1 to 5, **characterised in that**, at openings (21, 22) of the passages (11, 12), there are arranged abutment points (23, 24) for anchoring elements (34) of the rod shaped constructional elements (31, 32).

7. Junction connector according to one of claims 1 to 6, **characterised in that**, with respect to a rotational axis (43) defined by the connecting reception (13) of the junction connector (10), the slot base or slot bases (15, 17) of the passage (11) are formed rotationally symmetrical with respect to the slot base or slot bases (16, 18) of the other passage (12), wherein the rotational symmetry follows a two fold rotational axis.

8. Junction connector according to one of claims 1 to 7, **characterised in that** a cross piece traverses both passages (11,12) at a symmetrical spacing from the slot bases (15, 16) of the two passages (11, 12), the spacing corresponding to at least the clear width (19) of the passages (11, 12).

9. Junction connector according to claim 8, **characterised in that** the cross piece takes the form of a bolt (37).

## Revendications

1. Liaison nodale, en particulier pour des structures suspendues, laquelle comprend au moins deux passages (11, 12), chacun pour au moins un élément de construction en forme de barre (31, 32), et comporte au moins un logement de liaison (13) pour un troisième élément de construction (33), les passages (11, 12) étant conformés en fentes et étant disposés dans des plans parallèles (41, 42) avec un décalage latéral mutuel, **caractérisée en ce que**, au moins par endroits, les passages (11, 12) sont ouverts l'un par rapport à l'autre.

2. Liaison nodale selon la revendication 1, **caractérisée en ce qu'**au moins un fond de fente (15, 16, 17, 18) d'un passage (11, 12) présente un profil conique rétrécissant le passage (11, 12) vers l'intérieur.

3. Liaison nodale selon la revendication 1 ou 2, **caractérisée en ce que** le ou chaque passage (11, 12) comporte deux fonds de fentes (15, 16, 17, 18) qui présentent chacun un profil conique rétrécissant le passage (11, 12) et qui, à l'endroit le plus étroit, présentent un écartement mutuel (25, 26) correspondant au moins à l'ouverture libre (19) des passages (11, 12).

4. Liaison nodale selon une des revendications 1 à 3, **caractérisée en ce qu'**elle présente un aspect sensiblement cylindrique en forme de disque, c'est-à-dire qu'elle peut être conçue sous la forme d'un corps cylindrique plat en forme de disque et que les passages débouchent à la surface périphérique cylindrique de celui-ci.

5. Liaison nodale selon une des revendications 1 à 4, **caractérisée en ce que** les passages (11, 12) sont disposés de part et d'autre d'un plan médian (20) de la liaison nodale (10).

6. Liaison nodale selon une des revendications 1 à 5, **caractérisée en ce qu'**au niveau d'ouvertures (21, 22) des passages (11, 12) sont disposés des points d'appui (23, 24) pour des éléments d'ancrage (34) des éléments de construction en forme de barres (31, 32).

7. Liaison nodale selon une des revendications 1 à 6, **caractérisée en ce que**, en référence à l'axe de rotation (43) de la liaison nodale (10) défini par le logement de liaison (13), le ou les fonds de fentes (15, 17) de l'un des passages (11) sont conçus avec une symétrie de révolution par rapport au ou aux fonds de fentes (16, 18) de l'autre passage (12)

8. Liaison nodale selon une des revendications 1 à 7, **caractérisée en ce qu'**un pont de matière traverse les deux passages (11, 12) à une distance symétrique des fonds de fentes (15, 16) des deux passages (11, 12), la distance correspondant au moins à l'ouverture libre (19) des passages (11, 12).

9. Liaison nodale selon la revendication 8, **caractérisée en ce que** le pont de matière est conformé en goujon (37).
